# EUROPÄISCHE PATENTANMELDUNG

(11) **EP 2 025 244 A1**
(43) Veröffentlichungstag der Anmeldung: **18.02.2009**
(21) Anmeldenummer: 07113293.0
(22) Anmeldetag: 27.07.2007
(51) Int. Cl.: A23K 1/17, A23K 1/18

(54) **Futtermittel enthaltend Tetrahydrogeraniol**

(71) Anmelder: BASF SE, 67056 Ludwigshafen (DE)
(72) Erfinder: Pfeiffer, Angelika-Maria, 67134 Birkenheide (DE)
(74) Vertreter: Fitzner, Uwe

(57) **Zusammenfassung**

Die Erfindung betrifft einen Futtermittel enthaltend Tetrahydrogeraniol (THG) und dessen Verwendung zur Herstellung eines Mittels zur Verhinderung und Behandlung von intestinalen Erkrankungen bei Tieren.

## Beschreibung

Die Erfindung betrifft einen Futtermittel enthaltend Tetrahydrogeraniol (THG) und dessen Verwendung zur Herstellung eines Mittels zur Verhinderung und Behandlung von intestinalen Erkrankungen bei Tieren.

Als Folge des erhöhten Bedarfs an Lebensmittel weltweit fand eine Intensivierung der Produktion, auch im Bereich der Fleischproduktion, statt. Dies führte dazu, dass den Futtermitteln zusätzlich zu den natürlich enthaltenen Wirk- und Mineralstoffen gezielt weitere Mittel zugesetzt werden. Dabei handelt es sich einerseits um Zusatzstoffe, die keinen Wirkstoffcharakter aufweisen und der Verbesserung von Aussehen, Geruch, Geschmack, Konsistenz, Haltbarkeit, der Verbesserung der technologischen Eigenschaften der Futtermittel, sowie deren ernährungsphysiologischen und diätetischen Eigenschaften. Anderseits werden Mittel mit Wirkstoffcharakter zugesetzt, die allgemein der Gesundheit der Tiere dienen, insbesondere der Krankheitsvorbeugung und der Behandlung von Krankheiten.

Besonders im Bereich der Massentierhaltung ist es wichtig durch geeignete Futtermittel Infektionen zu vermeiden. Infrage kommen dabei hauptsächlich Infektionen des Darms. Infektiöse Darmentzündungen bei Tieren können durch Bakterien, Viren, Pilze oder Parasiten verursacht werden. Die häufigsten Erreger von Darminfektionen sind Bakterien. Eine besonders gefährliche Darmerkrankung in der Tierhaltung, insbesondere Schweine-und Geflügelhaltung, ist die nekrotisierende Enteritis (NE). Häufig wird diese Erkrankung durch Clostridien, insbesondere durch Clostridium perfringens, hervorgerufen. Clostridien sind obligat anaerobe, sporenbildende Bakterien, deren Keime ubiquitär in Erde und Schmutz und somit auch auf Futtermitteln zu finden sind. Durch Futter werden sie in großen Mengen aufgenommen und setzen im Darm Enterotoxine frei, die zu der nekrotisierende Enteritis, auch Darmdbrand genannt, führen.

Es ist seit etwa 60 Jahren bekannt, dass die Verfütterung von antimikrobiell wirkenden Substanzen bei Nutztieren nicht nur Krankheiten verhindert, sondern zu einer Steigerung der Lebendmassezunahme führt. Diese Wirkung beruht nicht nur auf einem verbesserten allgemeinen Gesundheitszustand der Tiere sondern auch auf einer erhöhten Nutzung der Nährstoffe sowie der Futterenergie. Bei den Substanzen handelte es sich insbesondere um Antibiotika. In den letzten Jahren waren von diesen sogenannten Fütterungsantibiotika noch *Salinomycin-Na, Flavophospholipol* und *Avilamycin* zugelassen. Seit dem 1. Januar 2006 wurde Antibiotika als Prophylaxe in Futtermitteln in der Europäischen Union die Zulassung entzogen.

Durch das Verbot der prophylaktischen Zugabe von Antibiotika besteht somit ein erhöhter Bedarf an Substanzen / Futtermitteln mit antimikrobiellen Eigenschaften.

Als Alternative zu den nicht mehr zugelassenen Mitteln wurden bisher Formiate, Terpene und ätherische Öle eingesetzt. Auch Alkohole wurden als antibakterielle Mitteln auf Oberflächen verwendet.

3,7-Dimethyloctanol zum Beispiel (Tetrahydrogeraniol, THG) ist bekannt als Zusatz in Kosmetikartikeln, Waschmittel oder Nahrungsmittel. THG wird als Lösungsmittel für Terpene eingesetzt, wie zum Beispiel in der US 6,361,787 oder als Bestandteil von Reinigungsmittel wie in der US20060293201 beschrieben. Aufgrund seines blumigen Aromas mit leichter Citrus-Note wird Tetrahydrogeraniol als Duft- und Geschmacksstoff eingesetzt. Ferner ist aus der Veröffentlichung JP 09-110683 (Anmeldungsnummer JP 07-294707) die Verwendung von THG in einem Mittel zur Behandlung von Periodontitis, Halitositis und Karies der Mundhöhle. Dabei wurde eine antibakterielle Wirkung gegen die Erreger dieser Beschwerden nachgewiesen, nämlich gegen *Porphyromonas ginggivalis* (gramnegative Stäbchen), *Fusobakterium nucleatum* (gramnegative Stäbchen) sowie *Streptococcus mutans (grampositive Kokken*).

Aufgabe der vorliegenden Erfindung ist demgemäß ein Futtermittel mit antibakterieller Wirkung bereitzustellen. Ferner soll das Futtermittel eine selektive Wirkung auf Mikroorganismen zeigen, insbesondere eine antibakterielle Wirkung gegen Sporen bildende Bakterien oder gegen Bakterien die im Darm Infektionen hervorrufen. Im Bereich der Tierernährung ist insbesondere die selektive Beeinflussung von pathogenen Mikroorganismen (wie beispielsweise E. coli, Salmonella) unter gleichzeitigem Erhalt und oder Förderung der gewünschten Mikroflora wünschenswert.

Ferner liegt der vorliegenden Erfindung die Aufgabe zugrunde, eine Möglichkeit zur Behandlung von Darminfektionen, besonders von bakteriell verursachten Darminfektionen, bei Tieren bereitzustellen.

Es wurde nun überraschend gefunden, dass Futtermittel enthaltend Tetrahydrogeraniol eine antibakterielle Wirkung zeigen. Antibakteriell im Sinne der vorliegenden Erfindung bedeutet gegen Bakterien wirksam beziehungsweise gegen Bakterien gerichtet.

Gegenstand der vorliegenden Erfindung ist somit ein Futtermittel enthaltend Tetrahydrogeraniol (THG), besonders mit antibakterieller Wirkung.

In einer Ausführungsform der vorliegenden Erfindung enthält das Futtermittel Tetrahydrogeraniol in einem Anteil von 1 mg THG / kg Futter bis 100.000 mg THG / kg Futter, bevorzugt Tetrahydrogeraniol in einem Anteil von 10 mg THG / kg Futter bis 10.000 mg THG / kg Futter, besonders bevorzugt Tetrahydrogeraniol in einem Anteil von 100 mg THG / kg Futter bis 1.000 mg THG / kg Futter, THG in einem Anteil von 200 mg THG / kg Futter bis 900 mg THG / kg Futter, THG in einem Anteil von 300 mg THG / kg Futter bis 800 mg THG / kg Futter, THG in einem Anteil von 400 mg THG / kg Futter bis 700 mg THG / kg Futter, THG in einem Anteil von 450 mg THG / kg Futter bis 600 mg THG / kg Futter, insbesondere Tetrahydrogeraniol in einem Anteil 500 mg THG / kg Futter.

In einer Ausführungsform der vorliegenden Erfindung enthält das Futtermittel Tetrahydrogeraniol in einem Anteil von 10 mg THG / kg Futter bis 500 mg THG / kg Futter, bevorzugt Tetrahydrogeraniol in einem Anteil von 25 mg THG / kg Futter bis 475 mg THG / kg Futter, besonders bevorzugt Tetrahydrogeraniol in einem Anteil von 50 mg THG / kg Futter bis 450 mg THG / kg Futter, THG in einem Anteil von 75 mg THG / kg Futter bis 425 mg THG / kg Futter, THG in einem Anteil von 100 mg THG / kg Futter bis 400 mg THG / kg Futter, THG in einem Anteil von 150 mg THG / kg Futter bis 350 mg THG / kg Futter, THG in einem Anteil von 200 mg THG / kg Futter bis 300 mg THG / kg Futter, insbesondere Tetrahydrogeraniol in einem Anteil 250 mg THG / kg Futter .

Im Zusammenhang mit der vorliegenden Erfindung sind unter "Futtermitteln" oder "Tierfutter" jedwede Stoffe oder Erzeugnisse zu verstehen, auch Zusatzstoffe, verarbeitet, teilweise verarbeitet oder unverarbeitet, die zur oralen Tierfütterung bestimmt sind. Demgemäß können Tierfutter sowohl in fester Form als auch in flüssiger Form vorliegen. Somit ist auch Trinkwasser für Tiere eingeschlossen.

Die erfindungsgemäßen Futtermittel sind Futtermittel im Sinne des Artikels 3 Nr. 4 der Verordnung (EG)Nr. 178/2002.

Bei den Futtermitteln kann es sich sowohl um Einzelfuttermittel, Mischfuttermittel als auch um Diätfuttermittel handeln wobei diese im LFGB § 3, Ziffern 11, 12 und 13 in der Fassung vom 26.4.2006 definiert sind.

Die erfindungsgemäßen Futtermittel können ein, zwei, drei, vier, fünf, sechs, sieben, acht, neun, zehn, elf, zwölf oder mehr Bestandteile enthalten ausgewählt aus der Gruppe bestehend aus: Mais, Gerste, Weizen, Hafer, Roggen, Triticale, Sorghum, Reis und Kleien, Grieskleien sowie Mehle dieser Getreidearten, Sojabohnen, Sojaprodukte wie Sojaextraktionsschrot, Raps, Rapsextraktionsschrot, Baumwollsaat und Extraktionsschrot, Sonnenblumenkerne, Sonnenblumenextraktionsschrot, Leinsaat, Leinextraktionsschrot, Expeller von Ölsaaten, Ackerbohnen und Erbsen, Gluten, Gelatine, Tapioka, Hefen, Single Cell Protein, Fischmehl, Salze, Mineralstoffe, Spurenelemente, Vitamine, Aminosäuren, Öle/Fette und dergleichen.

Die erfindungsgemäßen Futtermittel werden so zusammengesetzt, dass der entsprechende Bedarf an Nährstoffen für die jeweilige Tierart optimal gedeckt wird. Im allgemeinen werden pflanzliche Futtermittelkomponenten aus der Gruppe bestehend aus wie Mais-, Weizen- oder Gerstenschrot, Sojavollbohnenschrot, Sojaextraktionsschrot, Leinextraktionsschrot, Rapsextraktionsschrot, Grünmehl oder Erbsenschrot als Rohproteinquellen gewählt. Um einen entsprechenden Energiegehalt des Futtermittels zu gewährleisten, werden Sojaöl oder andere tierische oder pflanzliche Fette zugegeben. Da die pflanzlichen Proteinquellen einige essentielle Aminosäuren nur in unzureichender Menge beinhalten, werden Futtermittel häufig mit Aminosäuren angereichert. Hierbei handelt es sich vor allem um Lysin und Methionin. Um die Mineralstoff- und Vitaminversorgung der Nutztiere zu gewährleisten, werden außerdem Mineralstoffe und Vitamine zugesetzt. Die Art und Menge der zugesetzten Mineralstoffe und Vitamine hängt von der Tierspezies ab und ist dem Fachmann bekannt (s. z.B. Jeroch et al., Ernährung landwirtschaftlicher Nutztiere, Ulmer, UTB). Zur Deckung des Nährstoff- und Energiebedarfs können Alleinfutter verwendet werden, die alle Nährstoffe im bedarfsdeckenden Verhältnis zueinander enthalten. Es kann das einzige Futter der Tiere bilden. Alternativ kann zu einem Körnerfutter aus Getreide ein Ergänzungsfutter gegeben werden. Hierbei handelt es sich um eiweiß-, mineralstoff- und vitaminreiche Futtermischungen, die das Futter sinnvoll ergänzen.

In einer Ausführungsform der vorliegenden Erfindung enthält das Futtermittel Sojabohnen, bevorzugt geröstete Sojabohnen, zwischen 2% Und 10% Gewichtsanteile, besonders 5%.

In einer weiteren Ausführungsform enthält das Futtermittel die Sojabohnen als Sojabohnenmehl zwischen 10% und 40% Gewichtsanteile, bevorzugt %15 bis 30%, besonders bevorzugt zwischen 17,5% und 29%.

In einer Ausführungsform der vorliegenden Erfindung enthält das Futtermittel Natriumsalze, bevorzugt zwischen 0,5 Promille und 2‰ Natriumchlorid, insbesondere 1,9‰ Natriumchlorid.

In einer weiteren Ausführungsform enthält das Futtermittel ein oder mehrere Aminosäuren, bevorzugt ausgewählt aus der Gruppe bestehend aus Lysin, Methionin und Threonin, vorliegend als freie Säuren oder in Form von Hydrochlorid. Das Futtermittel enthält zwischen ein ‰ und 3‰ Methionin, bevorzugt 1,4‰ oder 2,3‰, zwischen 1 ‰ und 2‰ Lysin-Hydrochlorid, bevorzugt 1,1‰ oder 1,6‰.

In einer weiteren Ausführungsform der vorliegenden Erfindung enthält das Futtermittel zwischen 30% und 70% Mais, bevorzugt zwischen 40% und 60%, besonders bevorzugt zwischen 50% und 55%, insbesondere 53,26% Mais.

In einer weiteren Ausführungsform der vorliegenden Erfindung enthält das Futtermittel zwischen 20% und 40% Weizen, bevorzugt zwischen 30% und 35%, besonders bevorzugt 30,76% Weizen. In einer weiteren Ausführungsform der vorliegenden Erfindung enthält das Futtermittel zwischen 15% und 30% Gerste, bevorzugt zwischen 20% um 25% besonders bevorzugt 23,5% Gerste.

Die erfindungsgemäßen Futtermittel eignen sich als Tierfutter für Tiere, ausgewählt aus der Gruppe, bestehend aus

Vieh, Rindern, Bullen, Kühen, Kälbern, Schweinen, Zuchtsauen, Mastschweinen, Ferkeln, Geflügel, Masthähnchen, Broilern, Legehennen, Küken, Gänse, Enten, Pferden, Hasen, Kaninchen und Haustieren, Hunden, Katzen, Vögeln, Nagern.

In einer weiteren Ausführungsform handelt es sich bei dem erfindungsgemäßen Futtermittel um Tierfutter für Geflügel.

In einer weiteren Ausführungsform handelt es sich bei dem erfindungsgemäßen Futtermittel um Tierfutter für Legehennen und/oder Masthähnchen.

In einer weiteren Ausführungsform der vorliegenden Erfindung enthält das Futtermittel außerdem Futtermittelzusatzstoffe, somit solche Stoffe, die insbesondere einzeln oder in Form von Zubereitungen dazu bestimmt sind, Futtermitteln zugesetzt zu werden, um
- die Beschaffenheit der Futtermittel oder der tierischen Erzeugnisse zu beeinflussen,
- den Bedarf der Tiere an bestimmten Nähr- oder Wirkstoffen zu decken oder die tierischen Erzeugung zu verbessern, insbesondere durch Einwirkung auf die Magen- und Darmflora oder die Verdaulichkeit der Futtermittel oder durch Verringerung von Belästigungen durch Ausscheidungen der Tiere, oder
- besondere Ernährungszwecke zu erreichen oder bestimmte zeitweilige ernährungsphysiologische Bedürfnisse der Tiere zu decken.

Die erfindungsgemäßen Futtermittel eignen sich insbesondere Herstellung eines Mittels zur Verhinderung und/oder Behandlung von intestinalen Erkrankungen bei Tieren.

In einer weiteren Ausführungsform wird das erfindungsgemäße Futtermittel zur Herstellung eines Mittels zur Verhinderung und/oder Behandlung von bakteriellen Darminfektionen bei Tieren verwendet.

In einer weiteren Ausführungsform wird das erfindungsgemäße Futtermittel zur Herstellung eines Mittels zur Verhinderung und/oder Behandlung von Erkrankungen im Dünndarm von Tieren verwendet.

In einer weiteren Ausführungsform wird das erfindungsgemäße Futtermittel gemäß zur Herstellung eines Mittels zur Verhinderung und/oder Behandlung der nekrotisierenden Enteritis (NE) bei Tieren verwendet.

In einer weiteren Ausführungsform wird das erfindungsgemäße Futtermittel zur Herstellung eines Mittels zur Verhinderung der Kolonisierung und/oder Keimbelastung des Dünndarms von Tieren durch obligat anaerobe Bakterien verwendet.

Die erfindungsgemäße Verwendung beruht auf der antibakteriellen Wirkung von THG. Antibakteriell im Sinne der vorliegenden Erfindung bedeutet, dass Bakterien durch das Mittel abgetötet werden und so eine Behandlung bakterieller Darminfektionen bei Tieren, besonders von Erkrankungen im Dünndarm, insbesondere der nekrotisierenden Enteritis (NE) bei Tieren erfolgreich durchgeführt werden kann.

Antibakteriell im Sinne der vorliegenden Erfindung bedeutet ferner, dass eine Kolonisation, also Kolonienbildung im Darm der Tiere und damit Vermehrung der Bakterien verhindert wird. Ferner wird die schädlichen Auswirkungen von Bakterien, besonders die Ausschüttung von Toxine, insbesondere Enterotoxine, verhindert oder diese Moleküle gebunden oder gespalten werden, so dass eine Weiterreaktion mit schädlichen Auswirkungen für den Wirtsorganismus nicht mehr möglich ist.

In einer Ausführungsform der vorliegenden Erfindung wird das Futtermittel zur Herstellung eines Mittels zur Verhinderung und/oder Behandlung von Erkrankungen im Dünndarm verwendet, die ausgelöst werden durch obligat anaerobe, grampositive Stäbchenbakterien gerichtet, bevorzugt aus der Familie Bacillacaea, besonders bevorzugt der Gattung Clostridium, insbesondere Clostridium perfringens.

In einer weiteren Ausführungsform der vorliegenden Erfindung wird das Futtermittel zur Herstellung eines Mittels zur Verhinderung und/oder Behandlung der nekrotisierenden Enteritis (NE) ausgelöst durch Clostridium perfringens, bei Tieren verwendet.

In einer Ausführungsform der vorliegenden Erfindung besteht das hergestellte Mittel zu 100% (Gewichtsprozent) aus dem erfindungsgemäßen Futtermittel mit den oben angeführten Bestandteilen.

In einer Ausführungsform der vorliegenden Erfindung besteht das hergestellte Mittel zu 10%, 20%, 30%, 40%, 50%, 60%, 70%, 80%, bevorzugt 90%, 95%, 97%, besonders bevorzugt 98%, 99% (Gewichtsprozent), aus dem erfindungsgemäßen Futtermittel mit den oben angeführten Bestandteilen.

In einer weiteren Ausführungsform können weitere Bestandteile enthalten sein. Die Wahl der weiteren Bestandteile richtet sich dabei nach dem gewählten Einsatzgebiet und gewählten Darreichungsform des so erhältlichen Mittels. Als weitere Bestandteile im Sinne der vorliegenden Erfindung werden beispielsweise folgende Stoffe genannt: Vitamine, Carotinoide, Spurenelemente, Antioxidantien, Enzyme, Aminosäuren, Mineralstoffe, Emulgatoren, Stabilisatoren, Konservierungsmittel, Bindemittel, Antibackmittel und/oder Geschmacksstoffe.

In einer weiteren Ausführungsform kann das hergestellte Mittel weitere Wirkstoffe enthalten. Unter Wirkstoffen im Sinne der Erfindung sind alle Stoffe mit einer pharmazeutischen oder biologischen Wirkung zu verstehen.

In einer Ausführungsform werden die Wirkstoffe ausgewählt aus der Gruppe bestehend aus: Brotizolam, Deltamethrin, Dimethylsulfoxid, Fenvalerat, Gentamicin, Metamizol, Neomycin, Piperazin, Sulfadimidin, Thiabendazol oder aus Arzneimittelgruppen: Androgene, Anthelminthika, Antibiotika und Chemotherapeutika, Antiparasitika, Avermectine, Benzimidazole (z.B. Thiabendazol, Fenbendazol, Flubendazol, Febantel), beta-Blocker Fluochinolone, Formaldehydhaltige Arzneimittel, Gestagene, Gonadotropine, Glukokortikoide, Kombinationspräparate zwischen Chemotherapeutika (Antibiotika) und Glukokortikoiden (Antiinfektiva), Kombinationspräparate zwischen nicht-steroidalen Antiphlogistika und Glukokortikoiden, Langzeittetracykline, Neuroleptica, Organophosphate, Östrogene, Synthetische Pyrethroide und Trockensteller. Wirkstoffe ausgewählt aus dieser Gruppe werden in einem Anteil von 1 bis 100 mg je kg Futtermittel eingesetzt, bevorzugt 5 bis 50 mg je kg Futtermittel, insbesondere 10 mg/kg erfindungsgemäßes Futtermittel.

In einer Ausführungsform sind die Wirkstoffe ätherische Öle, z.B. ausgewählt aus der Gruppe bestehend aus: Benzaldehyd, Carvacrol, Carvon R, Carvon S, Citral, Curcumin, Estragol, Eugenol, Geranylacetat, Gerianol, Isoeugenol, Nerol, Perillaldehyd, Piperin, Salicylaldehyd, Terpineol, Thymol und Zimtaldehyd.

Wirkstoffe ausgewählt aus dieser Gruppe werden in einem Anteil von 10 bis 10.000 mg je kg Futtermittel eingesetzt, bevorzugt 50 bis 1000 mg je kg Futtermittel, 100 bis 800 mg je kg Futtermittel, 150 bis 700 mg je kg Futtermittel, insbesondere 200 bis 500 mg je kg Futtermittel erfindungsgemäßes Futtermittel.

In einer weiteren Ausführungsform kann das hergestellte Mittel Zuschlagstoffe enthalten. Unter "Zuschlagstoffen" werden Stoffe verstanden, die der Verbesserung der Produkteigenschaften, wie Staubverhalten, Fließeigenschaften, Wasseraufnahmefähigkeit und Lagerstabilität dienen. Zuschlagstoffe und/oder Mischungen davon können auf der Basis von Zuckern z.B. Lactose oder Maltodextrin, auf der Basis von Getreide- oder Hülsenfruchtprodukten z.B. Maisspindelmehl, Weizenkleie und Sojaschrot, auf der Basis von Mineralsalzen u.a. Calcium-, Magnesium-, Natrium-, Kaliumsalze, sowie auch D-Pantothensäure oder deren Salze selbst (chemisch oder fermentativ hergestelltes D-Pantothensäuresalz) sein.

Gegenstand der vorliegenden Erfindung ist ferner ein Verfahren zur Herstellung des erfindungsgemäßen Futtermittels.

Die Herstellung erfolgt im einfachsten Fall durch Mischen der Komponenten, mindestens eines der oben genannten Bestandteile von Futtermitteln und Tetrahydrogeraniol. Ebenso kann die Herstellung durch Mischen Futtermittel-Bestandteile und von THG in Lösung erfolgen und gegebenenfalls sich anschließender Entfernung der Lösungsmittel.

Die einfachste Form der Mischung ist das Zusammenbringen der Komponenten in einem Mischer. Solche Mischer sind dem Fachmann bekannt, beispielsweise von den Firmen Ruberg, Lödige, Drais, Engelsmann etc. Die Mischer können diskontinuierlich oder kontinuierlich betrieben werden. Im diskontinuierlichen Mischer werden die zu mischenden Komponenten im gewünschten Verhältnis vorgelegt und dann eine hinreichende Zeit im Bereich von Minuten bis Stunden gemischt. Die Mischzeit und die Mischbeanspruchung werden so festgelegt, dass die beiden Komponenten homogen verteilt in der Mischung vorliegen. Im Fall der kontinuierlichen Mischung werden beide Komponenten kontinuierlich zugegeben, gegebenenfalls nach einer Vormischung. Auch im kontinuierlichen Mischer ist die Verweilzeit und Mischbeanspruchung so zu wählen, dass beide Komponenten homogen verteilt in der Mischung vorliegen. Die Mischzeit ist im kontinuierlichen Fall häufig kürzer und die Beanspruchung höher als im Fall der diskontinuierlichen Mischung. Die Mischung wird üblicherweise bei Raumtemperatur durchgeführt, kann aber auch bei höheren oder niedrigeren Temperaturen durchgeführt werden. In einer bevorzugten Ausführungsform werden die Mischungen bei Temperaturen über 25 °C , insbesondere über 40 insbesondere über 60 °C durchgeführt. Die Mischung kann bei Normaldruck, im Vakuum oder bei Überdruck durchgeführt werden. Für die hier beschriebenen Mischaufgaben ist die Mischung bei Normaldruck zu bevorzugen.

Alternativ ist die Mischung in einer Mühle oder über eine Bewegung des gesamten Behälters möglich. Beispiele hierfür sind Taumelmischer, Trommelmischer oder ähnliches. Eine weitere Möglichkeit besteht in der Verwendung von pneumatischen Mischern. Die Mischung von Feststoffen ist beispielsweise in Ullmann's Encyclopedia of Industrial Chemistry, Sixth Edition, 2000, Mixing of Solids beschrieben.

In einer bevorzugten Ausführungsform liegen die Futtermittel in fester Form vor. Je nach anwendungstechnischer Anforderung können die Futtermittel mit einer mittleren Partikelgröße von 1 µm bis 100 000 µm vorliegen.

Ein Gegenstand der vorliegenden Erfindung betrifft ein Verfahren zur Herstellung eines Mittels zur Verhinderung und/oder Behandlung von intestinalen Erkrankungen bei Tieren.

Dies wird in analoger Weise zu dem oben beschriebenen Herstellungsverfahren für die erfindungsgemäßen Futtermittel durchgeführt. Im Unterschied dazu kann jedoch ein weiterer der oben genannten Bestandteile und/oder Wirkstoffe hinzugefügt beziehungsweise dazugemischt werden.

Die Herstellung von erfindungsgemäßem Futtermittel und Mittel kann vorteilhaft in Wirbelschicht oder in Kombination von Mischer und Wirbelschicht erfolgen.

Die Herstellung von erfindungsgemäßem Futtermittel und Mittel kann mittels Verfahren erfolgen, wie sie in der WO 03/045168, ab Seite 14, Zeile 18 bis Seite 40, Zeile 14 beschrieben sind.

In einer Ausführung der vorliegenden Erfindung wird Tetrahydrogeraniol verwendet, dass in einem Verfahren her gestellt wurde wie es in der EP 1 318 131 beschrieben.

In einer weiteren Ausführung der vorliegenden Erfindung wird das dort entstandene Produktgemisch enthaltend neben Tetrahydrogeraniol noch Tetrahydrolinalool, Citronelol, Nerol, Citral verwendet.

Der Einsatz der erfindungsgemäßen Futtermittel kann beispielsweise bei durch eine Krankheit geschwächten Tieren zu einer schnelleren Genesung führen.

Die erfindungsgemäßen Futtermittel eignen sich insbesondere als leistungsfördernde Substanzen.

Bei Masthähnchen, gefüttert mit dem erfindungsgemäßen Futtermittel und mit Clostridium perfringens inokuliert, zeigt nur eine halb so große Anzahl von Masthähnchen-Wunden der NE im Darm als Kontroll-Masthähnchen gefüttert mit analogem Futter ohne THG.

Bei Masthähnchen, gefüttert mit dem erfindungsgemäßen Futtermittel und mit Eimeria acervulina inokuliert, zeigt ein weit geringerer Anteil von Masthähnchen Symptome der Coccidiose im Darm als Kontroll-Masthähnchen gefüttert mit analogem Futter ohne THG.

Ferner zeigen Masthähnchen, gefüttert mit dem erfindungsgemäßen Futtermittel ein weit besseres Futter-Verwertungs-Verhältnis als Kontroll-Masthähnchen gefüttert mit analogem Futter ohne THG.

Ferner weisen Masthähnchen-Populationen, gefüttert mit dem erfindungsgemäßen Futtermittel einen prozentual geringeren Anteil an Tieren mit Coccidiosis-Läsionen auf.

Ein weiterer Gegenstand der vorliegenden Erfindung ist die Verwendung von Tetrahydrogeraniol in Futtermitteln für Tiere ausgewählt aus der Gruppe, bestehend aus Vieh, Rindern, Bullen, Kühen, Kälbern, Schweinen, Zuchtsauen, Mastschweinen, Ferkeln, Geflügel, Masthähnchen, Broilern, Legehennen, Küken, Gänsen, Enten, Pferden, Hasen, Kaninchen und Haustieren, Hunden, Katzen, Vögeln, Nagern..

Ein weiterer Gegenstand der vorliegenden Erfindung ist die Verwendung von Tetrahydrogeraniol zur Herstellung eines Mittels mit antibakterieller Wirkung.

Ein weiterer Gegenstand der vorliegenden Erfindung ist die Verwendung von Tetrahydrogeraniol zur Herstellung eines Mittels zur Verhinderung von intestinalen Erkrankungen bei Tieren.

Ein weiterer Gegenstand der vorliegenden Erfindung ist die Verwendung von Tetrahydogeraniol zur Herstellung eines Mittels zur Behandlung von bakteriellen Darminfektionen bei Tieren.

Ein weiterer Gegenstand der vorliegenden Erfindung ist die Verwendung von Tetrahydrogeraniol zur Herstellung eines Mittels zur Verhinderung von Erkrankungen im Dünndarm von Tieren.

Ein weiterer Gegenstand der vorliegenden Erfindung ist die Verwendung von Tetrahydrogeraniol zur Herstellung eines Mittels zur Verhinderung der nekrotisierenden Enteritis (NE) bei Tieren.

Ein weiterer Gegenstand der vorliegenden Erfindung ist die Verwendung von Tetrahydrogeraniol zur Herstellung eines Futtermittelzusatzes oder eines Futtermittels zur Verhinderung oder Verminderung der Kolonisierung und/oder Keimbelastung des Dünndarms von Tieren durch strikt anaerobe Bakterien.

Ein weiterer Gegenstand der vorliegenden Erfindung ist die Verwendung von Tetrahydrogeraniol zur Herstellung eines Futtermittelzusatzes oder eines Futtermittels zur Verhinderung oder Verminderung der Kolonisierung / Keimbelastung des Dünndarms von Tieren durch Bakterien der Gattung Clostridium, bevorzugt Clostridium perfringens.

Ein weiterer Gegenstand der vorliegenden Erfindung ist die Herstellung eines Futtermittelzusatzes enthaltend Tetrahydrogeraniol in Verfahren wie oben beschrieben.

Im folgenden wird die Erfindung unter Bezugnahme auf die Beispiele näher erläutert:

### Beispiele:

### Tierhaltung

Insgesamt wurden 2300 männliche ein Tag alte Hähnchen von komerziellen Brutanstalten erhalten. Bei der Ankunft wurden 384 gesunde Broiler ausgewählt und auf 16 Buchten nach einem Gewichtsklassen-System aufgeteilt. Das Ergebnis waren 16 Gruppen von 24 Masthähnchen mit einem ähnlichen durchschnittlichen Körpergewicht und ähnlicher Körpergewichtsverteilung. Bevor sie in die Käfige gesetzt wurden, wurden die Tiere pro Gruppe gewogen.

Die Broiler Vögel wurden in Buchten in Bodenhaltnug gehalten (24 Tiere pro Bucht von 0.75 m²)_{.}

Die 16 Buchten wurden in einem separaten Geflügelhauses. Jede Behandlungseinheit bestand aus acht Buchten

Jede Bucht war ausgestattet mit einem automatischen Wasserlieferanten (zwei Saugtrinkgefäße mit Bechern) und einem Futtertrog. Als Streumaterial wurden Holzspäne verwendet .

Die Temperatur wurde schrittweise von 33°C bei der Ankunft auf 20° Grad beim Alter von 35 Tagen heruntergefahren. Die relative Luftfeuchtigkeit wurde während des Experiments bei 65% gehalten. Ein Ablauf von 23 Stunden Licht und 1 Stunde Dunkelheit wurde während des Experiments aufrecht erhalten, bis auf eine Zeitspanne von 6 Stunden Dunkelheit an Tag 10, vor der Eimeria-Impfung, und an den Tagen 14, 15 und 16 vor der Attacke (dem challenging) mit Clostridium perfingens.

Die Hähnchen wurden am Tag 1 ihres Alters gegen die New Castle Krankeit (NCD) und die infektiöse Bronchitis (IB) entsprechend der Routine/Stelle- Praxis geimpft.

### Ernährungund Fütterung

Während der Startperiode ( Tag 0-9) wurde eine Mais-Sojabohnenmehl-Diät Tabelle 1) verabreicht. In der Wachstumsphase (Tag 9-35) wurde eine Diät basierend auf Weizen, Gerste und Sojabohnenmehl eingesetzt (Tabelle 2). Die Diäten wurden als bedarfs deckend kalkuliert , entsprechend den Empfehlungen bezüglich der verdaulichen Aminosäuren, dem Calcium und verdaulichen Phosphor gemäß CVB (2004) sowie bezüglich anderer Mineralien und Vitamine gemäß NRC (1994). Die Diäten waren nicht ergänzt (Kontrolldiät) oder ergänzt mit dem Testprodukt Tetrahydo-Geraniol.

THG wurde von BASF geliefert.

Die Nährstoffzusammensetzung von Starter- - und Grower-Diät wird in den Tabellen 1 bzw. 2 dargestellt.

Die Diäten wurden von Research Diet Services, Wijk bij Duurstede, Niederlande, hergestellt. Die Basisdiät wurde in einer Charge hergestellt und anschließend in acht Teile aufgeteilt. Die Testprodukte wurden oben auf die Rezeptur aufgebracht, bevor sie endgültig gemischt wurden.

Wasser und Nahrung wurden während des gesamten Experimentes zur freien Verfügung dargeboten, außer während der Perioden unmittelbar bevor der Eimeria-Inokulation am Tag 10 (Nahrungsentzug während eines Zeitraums von 8 Stunden) und vor den Impfungen mit Clostridium perfringens an den Tagen 14, 15 und 16 ( Nahrungsentzug während eines Zeitraums von 6 Stunden.)

**Tabelle 1. Zusammensetzung der Anfangsnahrung (Tag 0-9)**

| Futterstoff | Inhalt (g/kg) |
|---|---|
| Mais | 532.6 |
| Erbsen | 50.0 |
| Sojabohnen, geröstet | 50.0 |
| Sojabohnenmehl | 290.0 |
| Sojaöl | 35.0 |
| Kalk | 15.0 |
| MCP | ..13.3 |
| Premix ASG | 5.0 |
| NaCl | ....1.9 |
| NaHCO₃ | ....3.4 |
| L-Lysin HCl | ....1.1 |
| DL-Methionin | ....2.3 |
| L-Threonin | ....0.4 |
| Summe | 1000.0 |

**Kalkulierte Nährstoffkomposition (g/kg)**

| | |
|---|---|
| Reines Protein | 210 |
| Asche | ..60 |
| Reines Fett | ..71 |
| Reines Fett (HCL) | 78 |
| Reine Fasern | ..28 |
| CA | ....9.1 |
| Gesamt P | ....6.8 |
| Verwertbares P | ....4.0 |
| K | ....9.7 |
| Na | ....1.7 |
| Cl | ....1.9 |
| CE, MJ/kg | ..11.95 |
| Verdauliches Lysin | ..10.5 |
| Verdauliches Methionin | ....5.0 |
| Verdauliches Methionin + Cystin | ....7.7 |
| Verdauliches Threonin | ....6.9 |
| Verdauliches Tryptophan | ....2.1 |

| | |
|---|---|
| Premix ASG 2003 verabreicht per kg pro Nahrung (0.5% Dosis); 12000 IE Vitamin A, 2400 IE Vitamin D3, 30 IE Vitamin E, 1,5 mg Vitamin K3, 2 mg Vitamin B1, 7,5 mg Vitamin B2, 10 mg d- Pantothen-Säure, 35 mg Niacin - Amid, 200 µg Biotin, 20 µg Vitamin B12, 1 mg Folsäure, 3,5 mg Vitamin B6, 460,83 mg Cholin Chlorid, 80 mg Fe (als FeSO₄H₂O), 12 mg Cu (als CuSO₄5H₂O), 60 mg Zn(als ZnSO₄H₂O), 85 mg Mn ( als MnO), 0,4 mg Co(als CoSO₄7H₂O), 0,8 mg I (als Kl), 0,1 mg Se (als Na₂ SeO₃) und 125 mg Antioxidant (Oxytrap PXN). | |

**Tabelle 2. Zusammensetzung der Wachstumsnahrung (Tag 9-35)**

| Futterstoff | Inhalt (g/kg) |
|---|---|
| Weizen | 307.6 |
| Gerste | 235.0 |
| Sojabohnen | 50.0 |
| Sojabohnenmehl | 175.0 |
| Maisglutenmehl | 40.0 |
| Rapssamen, extrahiert | 50.0 |
| Soja, isoliert | 30.0 |
| Sojaöl | 20.0 |
| Tierfett | 60.0 |
| Premix ASG 2003¹ | 5.0 |
| Kalk | 11.5 |
| MCP | .. 7.5 |
| NaCl | ....0.5 |
| NaHCO₃ | ....3.2 |
| KCI | .. 1.7 |
| L-Lysin HCl | ....1.6 |
| DL-Methionin | ....1.4 |

| | |
|---|---|
| Summe 1000.0 | |

**Kalkulierte Nährstoffkomposition (g/kg)**

| | |
|---|---|
| Reines Protein | 226 |
| Asche | ..53 |
| Reines Fett | 104 |
| Reine Fasern | ..34 |
| CA | ....7.0 |
| Gesamt P | ....5.9 |
| Verwertbares P(aP) | ....3.1 |
| Ca/aP | ....2.3 |
| OE | ..11.9 |
| dEB, meq/kg | 244 |
| Verdauliches Lysin | ..10.4 |
| Verdauliches Methionin | ....4.5 |
| Verdauliches Methionin + Zystin | ....7.6 |

| | |
|---|---|
| Premix ASG 2003 verabreicht per kg pro Nahrung (0.5% Dosis); 12000 IE Vitamin A, 2400 IE Vitamin D3, 30 IE Vitamin E, 1,5 mg Vitamin K3, 2 mg Vitamin B1, 7,5 mg Vitamin B2, 10 mg d- Pantothen-Säure, 35 mg Niacin - Amid, 200 µg Biotin, 20 µg Vitamin B12, 1 mg Folsäure, 3,5 mg Vitamin B6, 460,83 mg Cholin Chlorid, 80 mg Fe (als FeSO₄H₂O), 12 mg Cu (als CuSO₄5H₂O), 60 mg Zn(als ZnSO4,H₂O), 85 mg Mn ( als MnO), 0,4 mg Co(als CoSO₄7H₂O), 0,8 mg I (als Kl), 0,1 mg Se (als Na₂SeO₃) und 125 mg Antioxidant (Oxytrap PXN). | |

### Inokulation mit Eimeria- und Clostridium -Bakterien

Am 10. Tag ihres Alters wurden die Masthähnchen mit 15.000 Oocysten von Eimeria acervulina oral geimpft. Die Masthähnchen aller Gruppen wurden an drei aufeinanderfolgenden Tagen (Tage 14, 15 und 16) 1.4* 10⁸cfu vegetativem Clostridium perfringens Typ A inokuliert. Masthähnchen, die einer Dissektion an Tag 15 und 16 unterzogen wurden, wurden am Tag der Sektion nicht geimpft.

### Sektion mit anschließender Bewertung von Läsionen

An den Tagen 15, 16, 17 und 21 wurden drei Masthähnchen pro Bucht (zufällig mit einer Flügelmarke an Tag 8 markiert ) entnommen gewogen und mit T61 eingeschläfert. Der Zwölffingerdarm und der Leerdarm wurden auf Läsionen verursacht durch Coccidiosis und nekrotische Enteritis hin untersucht.

Darmläsionen auf Grund von Coccidiosis im Zwölffingerdarm und dem Leerdarm wurden durch visuelle Beobachtung auf der folgenden Skala beurteilt:
0: keine Verletzungen;
1: 1-5 Läsionen < 1 mm pro cm²;
2: > 5 Läsionen pro cm^{2;}
3: Zonen von aneinander grenzenden Läsionen, welche noch voneinander unterschieden werden können;
4: große Läsionsbereiche , die nicht mehr voneinander unterschieden werden können.

Darmläsionen auf Grund von nekrotischer Enteritis im Zwölffingerdarm und dem Leerdarm wurden durch visuelle Beobachtung auf der folgenden Skala beurteilt:
0: keine Läsionen;
1:1-5 Läsionen < 1 mm;
2: > als 5 Läsionen < 1 mm oder < 5 Läsionen 1-2 mm;
3: mehr als 5 Läsionen mit einer Größe von 1-2 mm oder mit einer nekrotischen Zone.

Am Tag 15, 16 oder 21 wurde den Masthähnchen ileale und caecale Digesta entnommen , welche einer Sektion unterzogen wurden, um Läsionen bei allen Gruppen zu bewerten.

### Untersuchte Kriterien

(i) Die Hähnchen wurden pro Bucht an Tag 0 (Tag des Schlupfes bzw. Ankunftstag) 8, 22, 28 und 35 jeweils gewogen.
(ii) Die Futteraufnahme wurde pro Bucht Pferch an demselben Tag gemessen, an dem die Tier gewogen wurden ( Tage 0, 8, 22, 28 und 35 ) Das Verhältnis der Futterverwertung (feed conversion ratio, Futter-Verwertungs-Verhältnis) wurde für die oben genannte Zeit als kg-Futter pro kg Körpergewichtszunahme berechnet. (Zunahme des Gesamtgewichts inkl. der Todesfälle.)
(iii) Körpergewicht und Läsionsbewertung für Coccidiosis und nekrotische Enteritis im Zwölffingerdarm und dem Leerdarm in drei Tieren pro Bucht wurden an den Tagen 15,16,17 und 21 erfasst
   Ileal- sowie Caecal-Digstawurde von den getöteten Hähnchen am Tag 16 für die Analyse auf Clostridium perfringens via von quantitativer PCR gesammelt. Caecal-DigestaDie Proben wurden bei -20°C gelagert .an Tag 21 wurde in gleicher weise verfahren. Die Todesfälle (verendeete Tiere) wurden gewogen.
(iv) Beobachtungder Gesundheit der Tiere: der Gesundheitszustand der Vögel wurde täglich geprüft und Abweichungen wurden aufgezeichnet. Tote Tiere wurden auf den Grund der Todesursache hin untersucht.
(v) Temperatur und Feuchtigkeit in denVersuchstallungen wurden aufgezeichnet. Die Daten sind in der Studie aufgenommen.

### Chemische Analysen

Nach dem Mahlen wurden die Proben auf Rohnährstoffgehalte Trockenmasse, Rohasche a, Rohprotein , Rohfett, Rohfaser, Ca und P unter Anwendung von Standardmethoden analysiert. Die folgenden EC-Richtlinien wurden angewandt: 71/393/EC für Trockenmasse und Asche, 93/28/EC für Protein (N), 84/4/EC für Gesamtfett, 92/95/EC für Rohfaser. Die Mineralien wurden unter Anwendung plasma-angeregter Atomemissions-Spektrometrie (Plasma Atomic Emissions Spektometrie (ICP_AES)) bestimmt.

### Ergebnisse

Die Masthähnchen wurden am Schlupftag (Tag 0) gesund geliefert. Ihr durchschnittliches Körpergewicht betrug 44,4 g.

Die Sterblichkeit in den Tagen 0-35 des Alters betrug im Durchschnitt 3.8%.

Die mittlere Sterblichkeit vor der Inokulation mit Eimeria in dem Zeitraum von Tag 0 bis 9 betrug im Schnitt 2,1%.

Die Sterblichkeit in den Tagen 10 - 35 betrug 1,8%.

Keine allgemeine, spezifische Todesursache wurde gefunden.

Die Sterblichkeitsrate wird als relativ gering angesehen bezogen auf die Art der Studie, welche sowohl einen Angriff mit Eimeria acervulina als auch mit Clostridium perfringens beinhaltete.

Die Diäten innerhalb der Behandlungen hatten keine nennenswerte Auswirkung auf die Sterblichkeit.

Ergebnisse für die intestinale Coccidiosis und NE-Läsionsbewertung

Die Ergebnisse bezüglich der NE-Läsionen der Tiere werden in Tabelle 3 dargelegt. Die Vögel zeigten wie erwartet eine Reaktion hinsichtlich der Coccidiosis Inokulation , indem ein hoher Prozentsatz von Vögeln mit Coccidiosis-Läsionen und hohen intestinalen Verletzungswerten an Tag 14 zeigten und eine darauf folgende Abnahme sowohl im Prozentsatz als auch in der Schwere der Coccidiosis-Schädigungen an den folgenden Tagen.

An den Tagen 16 und 17 ergab sich ein bedeutender Behandlungserfolg bezüglich der intestinalen Coccidiosis-Läsions-Bewertung (Tabelle 4).

Der Prozentsatz der Tier, welche intestinale NE-Läsionen zeigten, war sehr gering am Tag 14. An den Tagen 15, 16 und 21 stieg der Prozentsatz der Tiere mit NE-Läsionen in der Kontrollgruppe auf 8 bzw. 21%.

Die Gruppe behandelt mit Tetrahydro-Geraniol zeigte einen geringeren Prozentsatz an NE-Läsionen im Vergleich zu der negativen Kontrollgruppe (insgesamt 6% NEpositive Tiere über den Zeitraum von vier Tagen Verletzungsbewertung).

**Tabelle 3: Prozentueller Anteil an Tieren mit NE-Läsionen:**

| | | | | | |
|---|---|---|---|---|---|
| Tag | 15 | 16 | 17 | 21 | Durchschnitt |
| Kontrollgruppe | 4,2 | 8,3 | 20,8 | 20,8 | 13,5 |
| THG-Gruppe | 0,0 | 4,2 | 4,2 | 16,7 | 6,3 |

**Tabelle 4: Prozentueller Anteil an Tieren mit Coccidiosis-Läsionen:**

| | | | | | |
|---|---|---|---|---|---|
| Tag | 15 | 16 | 17 | 21 | Durchschnitt |
| Kontrollgruppe | 95,8 | 70,8 | 75,0 | 12,5 | 63,53 |
| THG-Gruppe | 91,7 | 58,3 | 37,5 | 12,5 | 50 |

## Patentansprüche

1. Futtermittel enthaltend Tetrahydrogeraniol (THG).

2. Futtermittel gemäß Anspruch 1 enthaltend Tetrahydrogeraniol in einem Anteil von 1 mg THG / kg Futter bis 100.000 mg THG / kg Futter.

3. Futtermittel gemäß Anspruch 1 enthaltend Tetrahydrogeraniol in einem Anteil von 10 mg THG / kg Futter bis 10.000 mg THG / kg Futter.

4. Futtermittel gemäß Anspruch 1 enthaltend Sojabohnen.

5. Futtermittel gemäß Anspruch 1 enthaltend Natriumsalze und/oder Aminosäuren.

6. Futtermittel gemäß Anspruch 1 enthaltend Mais und/oder Weizen.

7. Futtermittel gemäß Anspruch 1 **dadurch gekennzeichnet, dass** es sich um Tierfutter für Tiere handelt, ausgewählt aus der Gruppe, bestehend aus Vieh, Rindern, Bullen, Kühen, Kälbern, Schweinen, Zuchtsauen, Mastschweinen, Ferkeln, Geflügel, Masthähnchen, Broilern, Legehennen, Küken, Gänsen, Enten, Pferden, Hasen, Kaninchen und Haustieren, Hunden, Katzen, Vögeln, Nagern.

8. Futtermittel gemäß Anspruch 1 **dadurch gekennzeichnet, dass** es sich um Tierfutter für Geflügel handelt.

9. Futtermittel gemäß Anspruch 1 **dadurch gekennzeichnet, dass** es sich um Tierfutter für Legehennen und/oder Masthähnchen handelt.

10. Verwendung des Futtermittels gemäß Anspruch 1 zur Herstellung eines Mittels zur Verhinderung und/oder Behandlung von intestinalen Erkrankungen bei Tieren.

11. Verwendung des Futtermittels gemäß Anspruch 1 zur Herstellung eines Mittels zur Verhinderung und/oder Behandlung von bakteriellen Darminfektionen bei Tieren.

12. Verwendung des Futtermittels gemäß Anspruch 1 zur Herstellung eines Mittels zur Verhinderung und/oder Behandlung von Erkrankungen im Dünndarm von Tieren.

13. Verwendung des Futtermittels gemäß Anspruch 1 zur Herstellung eines Mittels zur Verhinderung und/oder Behandlung der nekrotisierenden Enteritis (NE) bei Tieren.

14. Verwendung des Futtermittels gemäß Anspruch 1 zur Herstellung eines Mittels zur Verhinderung der Kolonisierung / Keimbelastung des Dünndarms von Tieren durch strikt anaerobe Bakterien.

15. Verwendung gemäß Anspruch 14 **dadurch gekennzeichnet, dass** die anaerobe Bakterien ausgewählt sind aus der Gattung der Clostridien.

16. Verwendung gemäß Anspruch 15 **dadurch gekennzeichnet, dass** die anaerobe Bakterien Clostridien, bevorzugt Clostridium perfringens sind.

17. Verwendung gemäß Anspruch 13 zur Verhinderung der nekrotisierenden Enteritis (NE) ausgelöst durch Clostridium perfringens, bei Tieren.

18. Verwendung gemäß einem der Ansprüche 10 bis 17 und zur Erhöhung der Futterverwertung (feed conversion ratio).
